# EUROPÄISCHE PATENTSCHRIFT

(11) **EP 0 495 245 B1**
(45) Veröffentlichungstag und Bekanntmachung des Hinweises auf die Patenterteilung: **27.03.1996**
(21) Anmeldenummer: 91122149.7
(22) Anmeldetag: 23.12.1991
(51) Int. Cl.: B65G 17/00

(54) **Förderer, insbesondere Positionierförderer**
Conveyor, in particular positioning conveyor
Convoyeur, en particulier convoyeur de positionnement

(30) Priorität: 15.01.1991 DE 4100926
(43) Veröffentlichungstag der Anmeldung: 22.07.1992
(73) Patentinhaber: Umlauf, Norbert, D-58093 Hagen (DE)
(72) Erfinder: Umlauf, Norbert, D-58093 Hagen (DE)
(74) Vertreter: Bergen, Klaus, Dipl.-Ing.

(56) Entgegenhaltungen:
- DE-B- 1 239 239
- US-A- 3 129 803
- US-A- 3 167 171

## Beschreibung

Die Erfindung betrifft einen Förderer, insbesondere Positionierförderer, mit einem angetriebenen Kettensystem.

Ein solcher Förderer, bei dem zwei parallel mit Abstand nebeneinander verlaufende, durch Querstreben zu einem Kettensystem miteinander verbundene Endlosketten von Kettenrädern angetrieben werden, und der mit Mitnehmern in Führungsschienen eingreifende, sich während des Kettenumlaufs zwangsgeführt quer zur Förderrichtung verstellende Fördergutverteiler aufweist, ist durch den Prospekt "STEWART HORIZONTAL SWITCHES" der Firma STEWART SYSTEMS, PLANO, TEXAS, bekanntgeworden; er dient in sehr langen Förderstrecken, z.B. bis 100 m Länge und mehr, wie sie beispielsweise in Flughäfen oder Hauptpostämtern anzutreffen sind, als Verteilerstation für Pakete, Gepäckstücke oder ähnliche Gegenstände. Die häufig aus endlos umlaufenden Edelstahlbändern als Förderbänder bestehenden Förderstrecken besitzen diese Positionierförderer, um das Fördergut entweder nach links oder nach rechts abzulenken und damit ein gezieltes, z.B. bei Paketen anhand der Adressaten orientiertes Sortieren zu erreichen. Bevor das Fördergut einlaufseitig auf den Positionierförderer gelangt, wird - am Beispiel der genannten Pakete - mittels eines Lesegerätes der Zielort ermittelt und automatisch eine der mehrsträngigen, sich in Förderrichtung verzweigenden bzw. gabelnden Führungsschiene einlaufseitig vorgeschaltete Weiche verstellt. Da die etwa halb so breit wie der Förderer und als Verschiebeplatten ausgebildeten Fördergutverteiler mit ihren Mitnehmern in die, z.B. wie die Führungsschienen U-förmige Weiche eingreifen, werden sie beim horizontalen Verschwenken der Weiche einem Schienenstrang zugeleitet. Bei sich in zwei Strängen gabelförmig verzweigenden Führungsschienen werden sie somit je nach Schwenklage der Weiche entweder in den zur rechten oder den zur linken Seite des Förderers führenden Schienenstrang geleitet und damit auch die auf den Verschiebeplatten ruhenden Pakete entsprechend nach links oder nach rechts verteilt. Das Fördergut läuft dabei stets mit einem von dem jeweils folgenden Fördergut ausreichenden Abstand auf den Positionierförderer auf.

Die bekannten Positionierförderer bzw. Fördergutverteiler unterliegen starken Schwingungen, erlauben nur geringe Transportgeschwindigkeiten, die bei max. 60 m/min liegen, und verursachen zudem sehr großen Lärm. Außerdem sind die Stand- bzw. Betriebszeiten dadurch beeinträchtigt, daß sich starke Stöße - und davon bewirkte Geräusche - beim Umlenken und Querverstellen der Verschiebeplatten ergeben. Das ist einerseits auf die beim Umlenken in den Umkehrpunkten des Förderers sprungschanzenartig überstehenden Verschiebeplatten zurückzuführen, die nämlich aus Gründen einigermaßen stabiler Laufverhältnisse doppelt so breit wie die Teilung der als Rundstäbe ausgebildeten Querstreben sind; andererseits lassen sich erhebliche Stöße nicht vermeiden, wenn die Mitnehmer, z.B. nach unten ragende, an ihren Enden Rollen aufweisende Stege, die Gabelung der sich in Transportrichtung mehrsträngig fortsetzenden Führungsschiene erreichen und dort abrupt in eine andere Laufrichtung gezwungen werden. Die zu sortierenden Pakete werden dabei stark beschleunigt, was sowohl das Ausrichten beeinträchtigt als auch zu Beschädigungen an der Verpackung führt. Schließlich ist der Kettenradantrieb der bekannten Förderer nicht nur sehr schwingungsintensiv, sondern es ist weiterhin ein nachteiliger Polygoneffekt vorhanden, d.h. eine Vielfachumschlingung der Kettenräder. Dadurch, daß ein- und auslaufseitig und damit insgesamt vier Kettenräder die Ketten umlenken, verlassen die Ketten jeweils an zahlreichen Stellen ihren Eingriff in die Kettenräder bzw. ihre Führungen; Schwingungen sind daher unvermeidlich.

US-A-3 167 171, auf dem der Oberbegriff des Anspruchs 1 basiert, und DE-B-1 239 239 betreffen auch Positionierförderer. Diese bekannten Förderer besitzen keine endlose, geschlossene Laufbahn zur Abstützung des Kettensystems. Die oben geschilderten Nachteile, vor allem bei höheren Fördergeschwindigkeiten, sind somit auch bei diesen bekannten Vorrichtungen gegeben.

Der Erfindung liegt die Aufgabe zugrunde, die Betriebsweise bekannter Sortierförderer zu verbessern, insbesondere kürzere Förderer mit höheren Transportgeschwindigkeiten bei gleichzeitig längeren Betriebszeiten und geringerer Lärmbelästigung zu ermöglichen, sowie ein besseres, schonenderes Ausrichten der Pakete zu erreichen.

Diese Aufgabe wird erfindungsgemäß durch die im Hauptanspruch angegebenen Merkmale gelöst. Mit einer somit völlig geschlossenen, mit Ausnahme des geraden Positionierbereichs, der im wesentlichen der gesamten horizontalen Wegstrecke des Obertrums des Förderers entspricht, kurvenförmig ausgebildeten Laufbahn läßt sich das Kettensystem von schroffen Umlenkungen weitestgehend frei bewegen; gleichzeitig verbessert die umlaufende, geschlossene Führung und Abstützung des Kettensystems die Ein- und Auslaufbedingungen in den Umlenkpunkten. Das endlos umlaufende, zylindrische Querstreben sowie darauf angeordnete Fördergutverteiler aufweisende Kettensystem kann aufgrund der über den gesamten Verlauf abgestützten Führung an keiner Stelle durchhängen und außerdem so verspannt werden, daß sich keine Schwingungen aufbauen können. Damit lassen sich die Laufeigenschaften und gleichermaßen die Fördergeschwindigkeiten erheblich verbessern, denn Stöße und Beschleunigungssprünge bzw. ein Abbremsen werden vermieden.

Das Kettensystem kann sich mit Rollen, alternativ mit Gleitflächen, z.B. Kufen, auf der Laufbahn - bzw. den beidseitigen Laufbahnen - abstützen. Wenn neben Laufrollen außerdem Seitenführungsrollen vorhanden sind, läßt sich das Kettensystem genau auf seiner vorgeschriebenen Umlaufbahn halten, da sich die Seitenführungsrollen an die Laufbahnen legen und abstützen können.

Nach einer vorteilhaften Ausgestaltung der Erfindung sind die Achsen der Rollen miteinander gekoppelt, so daß jeder, vorteilhaft als Verschiebeplatte ausgebildete Fördergutverteiler zwei bis vier Stützpunkte aufweist; es liegt ein aus wagenartigen Kettensegmenten bzw. Rollenblöcken bestehendes Kettensystem vor. Die auf diese Weise statisch stabile Bauweise erlaubt vorteilhaft eine der Kettenteilung entsprechende Breite der Verschiebeplatten zwischen den von den Rollenachsen zweier benachbarter Verschiebeplatten definierten Drehpunkten. Der bei den bekannten Förderern aufgrund der dort notwendigen, großen Plattenbreiten geschilderte, das Laufverhalten äußerst nachteilig beeinflussende Sprungschanzeneffekt tritt nicht auf. Für bestimmte Fördergüter könnte es ausreichen, zwischen den Querstreben anstatt Verschiebeplatten lediglich verschiebbare Noppen bzw. Mitnehmer vorzusehen; die zu verschiebende Masse läßt sich auf diese Weise verringern.

Wenn abwechselnd Verschiebeplatten und sich über die Breite des Fördergutverteilers erstreckende, an den Ketten des Kettensystems befestigte, niedriger als die Verschiebeplatten ausgebildete Zwischenleisten angeordnet sind, läßt sich eine weitestgehend geschlossene Tisch- bzw. Transportebene erreichen. Vorzugsweise sollte sich daher einer Verschiebeplatte jeweils eine Zwischenleiste anschließen. Da die Zwischenleisten niedriger als die Verschiebeplatten sind, liegt das Fördergut (Pakete) nur auf den tragenden Verschiebeplatten auf.

Es empfiehlt sich, die Oberfläche der Verschiebeplatten mit Reibbelägen zu versehen, z.B. in eine umlaufende Nut einen O-Ring einzusetzen, die für einen die Paketmitnahme begünstigenden, höheren Reibwert sorgen.

Indem die Verschiebeplatten und die Zwischenleisten einander zumindest an einer Längsseite überlappend angeordnet sind, läßt sich ein tangentiales Einlaufen des Kettensystems bzw. der Rollenblöcke in die Transportebene erreichen; gleichzeitig schließt sich die Oberfläche des Förderers weitestgehend, d.h. es entstehen keine wesentlichen Lücken zwischen den Verschiebeplatten und den Zwischenleisten, und zwar weder in der Transportebene noch im ein- und auslaufenden Radius im Bereich der Kettenräder. Allerdings sind aufgrund der geometrischen Ablaufbedingungen Freiräume für die Umlenkungen des Kettensystems unumgänglich. Die Verschiebeplatten und die Zwischenleisten können zum überlappenden Anordnen bzw. Ineinanderschachteln im Querschnitt z.b. T- oder L-förmig sein; ihre Breite kann größer, kleiner oder gleich der Kettenteilung sein.

Nach einer bevorzugten Ausgestaltung der Erfindung sind sowohl die Verschiebeplatten als auch die Zwischenleisten kleiner als die Kettenteilung, und zwischen zwei Verschiebeplatten sind mehrere Zwischenleisten angeordnet. Mit dieser Anordnung läßt sich hinsichtlich der unvermeidlichen Lücken eine optimierte Bauweise erreichen, die eine nahezu geschlossen umlaufende Tisch- bzw. Förderebene ermöglicht, aus der nur die schmalen Verschiebeleisten herausragen. Vor allem auch in den Umlenkbereichen der Kettenräder bleiben die Lücken unkritisch klein, was die Paketübergabe auf einen Bandförderer unmittelbar im Anschluß an das Sortieren erleichtert. Zwar können die Verschiebeplatten und Zwischenleisten einen beliebigen Querschnitt besitzen, jedoch empfiehlt es sich bei dieser Ausführung, für die Verschiebeplatten und Zwischenleisten rechteckige oder quadratische Profile (Balken) einzusetzen.

Vorteilhaft lassen sich seitlich aus dem Kettensystem vorkragende Enden von Querstreben als Rollenachsen ausbilden. Zur Lagerung der Laufrollen bedarf es keiner zusätzlichen Achsen, wenn die Rollen auf den Enden der ohnehin vorhandenen Querstreben gelagert sind.

Der von schroffen Umlenkungen weitestgehend freie Verlauf des wagenartigen Kettensystems kann weiterhin dadurch begünstigt werden, daß der Förderer lediglich an einer Seite, vorzugsweise nur am Auslaufende, die für den Antrieb unerläßlichen Kettenräder aufweist. Die Kettenräder dienen ausschließlich dem Antrieb; sie übertragen das Drehmoment. Der Weg des Kettensystems wird auch im Bereich der Kettenräder von der geschlossenen, umlaufenden Laufbahn definiert, auf die sich das Kettensystem mit seinen Laufrädern abstützt.

Jede Laufbahn kann vorzugsweise aus geraden oberen Leisten des Positionierbereichs und ihnen gegenüberliegenden, unteren, kurvenförmigen Führungsleisten bestehen, denen einerseits auslaufseitige, auf einer Antriebswelle der Kettenräder und andererseits einlaufseitige, auf einer Tragachse gelagerte Umlenk- und Führungssegmente zugeordnet sind. Das wagenartige Kettensystem, dessen in die Kettenräder eingreifenden Endlosketten von Mitnahmebuchsen der Querstreben definiert werden, taucht somit bei jedem Umlauf nur noch einmal in die mit Halbkreisteilungen zum Eingriff in die Mitnahmebuchsen versehenen Kettenräder ein, während es sich auf der gegenüberliegenden Seite ohne schroffen Übergang auf den Umlenk- und Führungssegmenten abrollen kann. Die von den Kettenrädern auf das Kettensystem übertragenen, durch das Aus- und Eintauchen unvermeidlichen Bewegungen werden um die Hälfte reduziert - bei Kunststoff-Buchsen sogar weitestgehend eliminiert - und damit entsprechend die Lebensdauer des Kettensystems bzw. des Förderers erhöht. Die jeweils parallel neben den Kettenrädern auf der Antriebswelle und Umlenkachse angeordneten Umlenk- und Führungssegmente lassen sich auch zum Spannen des Kettensystems verwenden. Wenn die Mitnahmebuchsen aus Kunststoff sind, wird außerdem eine Geräuschdämpfung sowie gleichmäßige Verteilung der Lasten und Kräfte begünstigt.

Die Kurvenform der vorteilhaft elastisch beschichteten, z.B. mit einem geräuschdämpfenden Kunststoffbelag aus Polyurethan versehenen Laufbahnen läßt sich vielfältig variieren, um optimale Laufverhältnisse und -bedingungen zu schaffen; bei einer kreisbogenförmigen Führung z.B. durch Verändern des Radius. Hierbei ist vorauszuschicken, daß der kleinste Radius der Laufbahn durch die Teilung des von den wagenartig miteinander gekoppelten Verschiebeplatten gebildeten Kettensystems und die halbkreisförmigen Ausnehmungen der Kettenräder festliegt. Der sich den Kettenrädern anschließende Bogen der Laufbahn läßt sich beispielsweise so auslegen, daß die Aufschlagkräfte zwischen den Flanken der halbkreisförmigen Ausnehmungen der Kettenräder und den Mitnahmebuchsen der Querstreben weitestgehend reduziert und damit die Geräusche erheblich verringert werden.

Wenn darüber hinaus der Radius der Laufbahn zumindest in dem den Kettenrädern vorgeschalteten Abschnitt geändert wird, läßt sich ein vorteilhafter Tangentenanlauf erreichen. Hierunter ist zu verstehen, daß die von den Kettenrädern erfaßten Mitnahmebuchsen eine Kreisbahn beschreiben, während sich die Mittelpunkte der Achsen der nachfolgenden Mitnahmebuchsen bis zum Auftreffen auf die Kettenräder auf einer Tangente zum Teilkreis der Kettenräder bewegen. Daraus ergibt sich, daß die aus der kreisbogenförmigen Führung tangential in den Bereich der Kettenräder eintretenden Querstreben mit ihren Mitnahmebuchsen übergangslos in die Ausnehmungen der Kettenräder eingreifen. Auf diese Weise läßt sich der bei Kettenantrieben außerordentlich nachteilige Polygoneffekt gegen Null abbauen.

Nach einer bevorzugten Ausführung der Erfindung sind weiterhin auch die sich vorteilhaft zumindest in zwei Stränge verzweigenden und in Förderrichtung folglich gabelartig fortsetzenden Führungsschienen kurvenförmig ausgebildet. Da die während des Kettenumlaufs die Verschiebeplatten über die Mitnehmer aus ihrer Mittenlage nach rechts oder nach links verstellenden Führungsschienen kurvenförmig sind, sich beispielsweise nach links und rechts ausbauchen, lassen sich abrupte Umlenkungen und dabei ansonsten unvermeidliche Stöße, wie bei den bekannten Förderern, weitestgehend vermeiden. Die Verschiebeplatten werden auf einer Kurvenbahn allmählich nach außen verschoben, so daß das Fördergut nur minimalen Beschleunigungen unterliegt; lange Pakete bzw. Fördergüter lassen sich besser ausrichten und positionieren und die Verpackung wird geschont. Weiterhin werden Schwingungen und Geräusche verringert.

Wenn eine den Schienensträngen einlaufseitig vorgeschaltete Weiche kurvenförmig ist, lassen sich die Verschiebeplatten schon zu einem frühestmöglichen Zeitpunkt auf einer Kurvenbahn und damit fließend, ohne schroffen Übergang in den jeweiligen Schienenstrang überleiten.

Bei einer mit einem Servo-Motor verbundenen Weiche ergeben sich beim Verschwenken der Weiche in eine neue Betriebslage optimierte Beschleunigungs- und Abbremsphasen, die es erlauben, auch Zwischenstellungen anzufahren, z.B. bei Schienenverzweigungen mit mehr als zwei Strängen.

Es wird vorgeschlagen, daß die Führungsschienen der Weiche mit einer Verformungsnase zugewandt sind. Für den Fall, daß die Weiche, z.B. aufgrund eines zu späten Schaltimpulses an den Servo-Motor oder bei Schwergängigkeit, beim Einlaufen eines Kettenwagens mit Verschiebeplatten noch nicht definiert einem Schienenstrang zugeordnet sein sollte und eine Mittelstellung einnimmt, wird die vorteilhaft aus weichem Kunststoff bestehende Verformungsnase selbsttätig ausweichen und die Mitnehmer der Verschiebeplatten stets in einen Schienenstrang überleiten; größere Stöße, Schläge oder gar Zerstörungen lassen sich vermeiden. Wenn die Verformungsnase vorteilhaft auf einer Schwenkplatte angeordnet ist, braucht sie nicht unmittelbar mit den Schienensträngen verbunden zu sein; ein Ausweichen stellt sich aufgrund der Beweglichkeit der Schwenkplatte ein.

Statt die Verschiebeplatten mechanisch zu führen, lassen sie sich in/an einer magnetischen Schiene führen. Damit ist eine berührungslose, extrem schnelle Schaltfolge zum Sortieren bzw. Verteilen möglich, z.B. bei mehr als zwei Schienensträngen.

Die Erfindung wird nachfolgend anhand eines in der Zeichnung dargestellten Ausführungsbeispiels näher erläutert. Es zeigen:
- Fig. 1: einen erfindungsgemäßen Positionierförderer in der Seitenansicht;
- Fig. 2: den Förderer gemäß Fig. 1 in der Draufsicht;
- Fig. 3: den Förderer gemäß Fig. 2 entlang der Linie III-III geschnitten;
- Fig. 4: eine ausschnittsweise Darstellung des Förderers gemäß Fig. 1, in der Draufsicht von unterhalb der Verschiebeplatten her gesehen;
- Fig. 5: den Gegenstand gemäß Fig. 4 in der Seitenansicht;
- Fig. 6: eine den Führungsschienen für die Verschiebeplatten des horizontalen Obertrums des Förderers vorgeschaltete, horizontal verschwenkbare Weiche, als Einzelheit dargestellt;
- Fig. 7: einen aus Verschiebeplatten und über die Breite durchgehenden Zwischenleisten bestehenden Positionierförderer in der Draufsicht;
- Fig. 8: in der Seitenansicht eine ausschnittsweise Darstellung eines überlappend angeordnete Verschiebeplatten und Zwischenleisten aufweisenden Förderers; und
- Fig. 9: in der Seitenansicht eine ausschnittsweise Darstellung des Bereichs eines Kettenrades eines Förderers, der Verschiebeplatten und Zwischenleisten in Balkenform aufweist, die kleiner als die Kettenteilung sind.

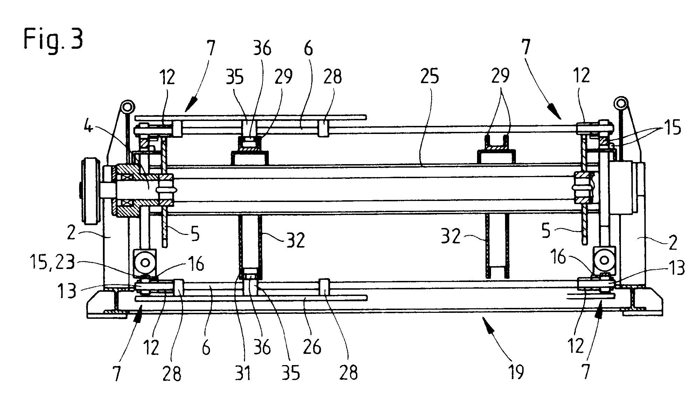

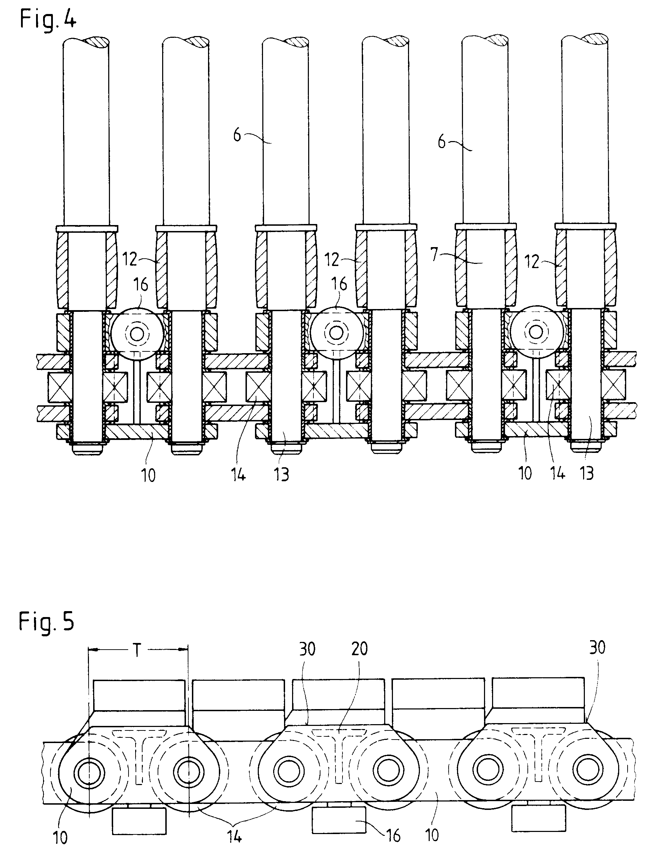

Ein in einer nicht dargestellten Förderbandstrecke integrierter Positionierförderer bzw. Fördergutverteiler 1 ist über einen Tragrahmen 2 mit dem Fundament verankert. Der Förderer 1 besteht aus zwei am Auslaufende 3 auf einer gemeinsamen Antriebswelle 4 mit Abstand nebeneinander angeordneten Kettenrädern 5 (vgl. Fig. 3) und besitzt ein in Form von zylindrischen, miteinander gekoppelten und Eingriffsachsen für die Kettenräder 5 aufweisenden Rohren 6 ausgebildetes, endlos umlaufendes Kettensystem 7. Das von einem am Auslaufende 3 angeordneten Antrieb 8 über Treibriemen 9 in die Antriebswelle 4 eingeleitete Drehmoment wird von den Kettenrädern 5 auf das Kettensystem 7 übertragen, wozu die Kettenräder 5 eine Vielzahl halbkreisförmiger Teilungen 11 aufweisen, in die die mit Mitnahmebuchsen 12 aus Kunststoff versehenen Achsen der Querrohre 6 eingreifen (vgl. Fig. 3 und 4); die Mitnahmebuchsen 12 der Querrohre 6 definieren somit die beiden Endlosketten des Kettensystems 7.

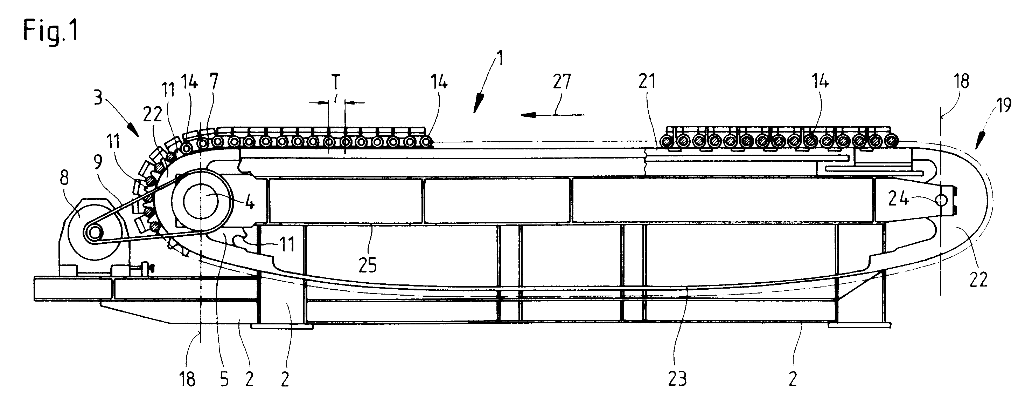

Die Querrohre 6 sind länger als der Abstand zwischen den beiden Kettenrädern 5 beträgt (vgl. Fig. 3), und bei dem Kettensystem 7 sind die Enden der Querrohre 6 als Rollenachsen 13 für Laufrollen 14 ausgebildet (vgl. Fig. 3 und 4). Das Kettensystem 7 besitzt somit eine Vielzahl Laufrollen 14, die sich auf Laufbahnen 15 abrollen; außerdem sind Seitenführungsrollen 16 vorhanden, die sich seitlich an die Laufbahnen 15 legen. Die Laufbahnen 15 werden in einem Positionierbereich 17, der im wesentlichen der Länge des horizontalen Obertrums und damit der geraden Wegstrecke des Kettensystems 7 zwischen den vertikalen Mittellinien 18 der Umlenkungen am Einlauf- und dem Auslaufende 19 bzw. 3 entspricht (vgl. Fig. 1), von geraden Leisten 21, von einlauf- und auslaufseitigen Umlenk- und Führungssegmenten 22 sowie von dem Positionierbereich 17 gegenüberliegenden, kurvenförmigen Führungsleisten 23 gebildet. Sowohl die geraden Leisten 21 als auch die kurvenförmigen Führungsleisten 23 greifen übergangslos in die Umlenk- und Führungssegmente 22 ein; am Auslaufende 3 sind die Umlenk- und Führungssegmente 22 zusammen mit den Kettenrädern 5 auf der Antriebswelle 4 und am Einlaufende 19 auf einer Tragachse 24 angeordnet, die in einem von dem umlaufenden Kettensystem 7 eingeschlossenen Profilrahmen 25 lagert. Das Kettensystem 7 rollt sich somit am Einlaufende 19 auf den dortigen Umlenk- und Führungssegmenten 22 antriebslos ab.

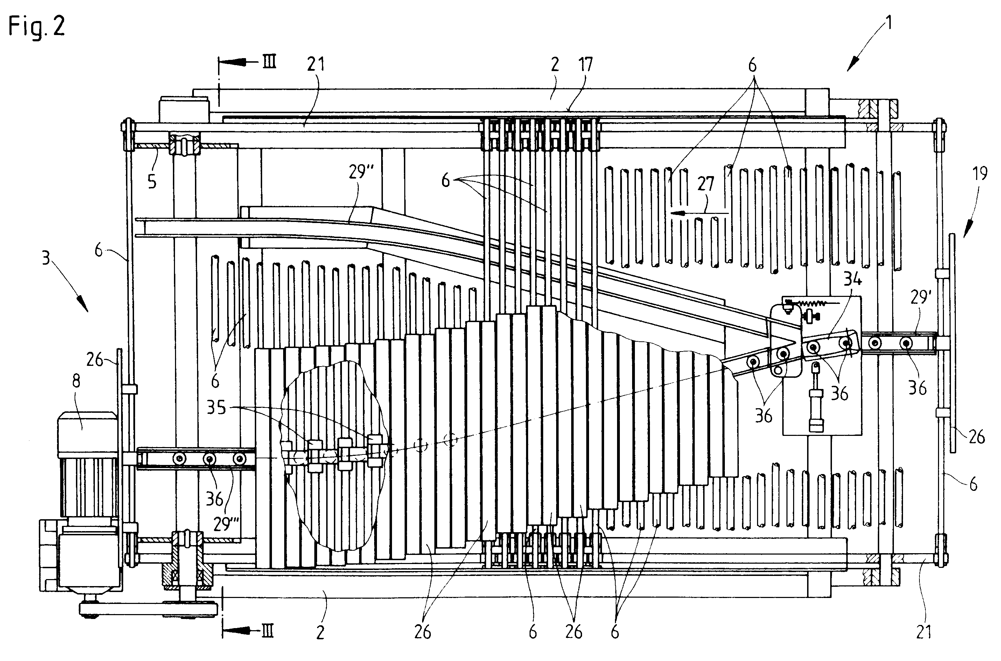

Der Positionierförderer 1 besitzt zahlreiche, in dem Kettensystem 7 zu einem endlosen, lückenlosen Band aneinandergereihte, als Verschiebeplatten 26 ausgebildete Fördergutverteiler (vgl. Fig. 2); diese sind etwa halb so lang, wie der Abstand zwischen den beiden Kettenrädern 5 beträgt und quer zur Förderrichtung 27 (vgl. die Pfeile in den Fig. 1 und 2) verstellbar mit Gleitführungen 28 (vgl. Fig. 3) auf den Querrohren 6 angeordnet. Benachbarte Rollenachsen 13 bzw. Querrohre 6 sind paarweise über Laschen 10 zu wagenartigen, sich jeweils mit vier Laufrollen 14 (zwei auf jeder Laufbahn) abstützenden Kettensegmenten bzw. Rollenblöcken 30 miteinander gekuppelt (vgl. Fig. 4 und 5); einander gegenüberliegende Laschen 10 sind durch T-förmige Träger 20 verbunden, die das Kettensystem 7 über die Breite versteifen. Die Verschiebeplatten 26 besitzen eine der Kettenteilung T (vgl. Fig. 1) entsprechende Breite zwischen den von den Rollenachsen 13 zweier benachbarter Verschiebeplatten 26 definierten Drehpunkten.

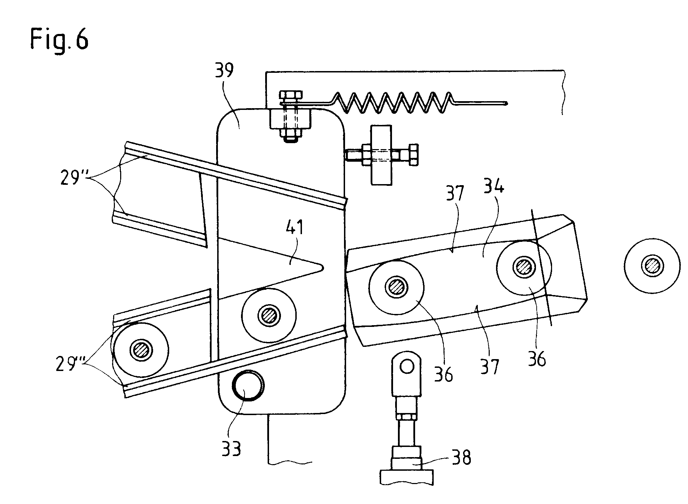

Zum Querverstellen der Verschiebeplatten 26 sind in dem von dem umlaufenden Kettensystem 7 eingeschlossenen Raum U-förmige Führungsschienen 29 bzw. 31 (vgl. Fig. 3) angeordnet. Dem Positionierbereich 17 zugewandte Führungsschienen 29 befinden sich auf dem Profilrahmen 25, und den kurvenförmigen Führungsleisten 23 zugewandte Führungsschienen 31 sind an mit dem Profilrahmen 25 verbundenen Trägern 32 angeordnet. Der Verlauf der oberen, dem Positionierbereich 17 zugeordneten Führungsschiene 29 ist in Fig. 2 dargestellt. Sie besteht am Einlaufende 19 des Förderers 1 aus einem geraden Teilstück 29', das sich in der Förderermitte in Förderrichtung 27 bis zu einer horizontal verschwenkbar gelagerten Weiche 34 erstreckt; im Anschluß an die in Fig. 6 als Einzelheit vergrößert dargestellte Weiche 34 gabelt sich die Schiene und geht in zwei sich kurvenförmig allmählich nach außen voneinander entfernende Schienenstränge 29'' bzw. 29''' über, wobei die Schienenstränge 29'', 29''' dann bei Erreichen des Auslaufendes 3 des Förderers 1 nahezu parallel zueinander verlaufen und am weitesten voneinander entfernt sind. Der Verlauf der untenliegenden Führungsschiene 31 entspricht dem der Führungsschiene 29 bzw. 29', 29'' und 29'''.

Im Ausführungsbeispiel nach den Fig. 2 und 4 ist jede zweite Verschiebeplatte 26 mit einem Mitnehmer 35 versehen, der an seinem freien Ende eine Führungsrolle 36 aufweist. Alternativ kann beispielsweise jede, oder nur jede dritte Verschiebeplatte 26 mit einem Mitnehmer 35 versehen sein; beim Verschieben nur jeder dritten Platte 26 läßt sich eine höhere Umlaufgeschwindigkeit des Förderers 1 als beim Verschieben jeder zweiten oder jeder Platte 26 erreichen.

Läuft in den Positionierförderer 1 beispielsweise ein auf die in Förderrichtung 27 gesehen rechte Seite zu positionierendes Transportgut ein, wird es von den Verschiebeplatten 26 übernommen, wobei der bzw. die - abhängig von den Abmessungen des Transportguts - Mitnehmer 35 mit den Führungsrollen 36 in das gerade Teilstück 29' der Schiene 29 eingreifen. Die Position der Verschiebeplatten 26 bezüglich ihrer Mittenlage im Förderer 1 (vgl. in Fig. 2 die Einlaufseite 19) verändert sich zunächst nicht; erst bei Erreichen der wie die Schienen 29, 31 im Querschnitt U-förmigen Weiche 34, die mit einem kurvenförmigen Verlauf 37 ausgebildet ist (vgl. Fig. 6), so daß die aus dem geraden Schienen-Teilstück 29' in die Weiche 34 einlaufenden Mitnehmer 35 ohne schroffen Übergang übernommen werden, wird das Querverschieben der Platten 26 ausgelöst. Um das Transportstück auf die rechte Seite des Positionierförderers 1 zu bringen, ist nämlich die Weiche 34 mittels eines signalbetätigten Servo-Antriebs 38 zuvor in die in Fig. 2 dargestellte Position veschwenkt worden, in der sie die Mitnehmer 35 mit ihren Führungsrollen 36 in den Schienenstrang 29'' weiterleitet; aufgrund der Kurvenform findet dieser Übergang ohne schroffe Umlenkungen statt; es werden keine Beschleunigungskräfte auf das Transportgut ausgeübt. Im Verlaufe des Weitertransportes in Förderrichtung 27 werden die über die Mitnehmer 35 bzw. deren Führungsrollen 36 in dem Schienenstrang 29'' zwangsgeführten Verschiebeplatten 26 entsprechend dem Kurvenverlauf des Schienenstrangs 29'' quer zur Förderrichtung 27 allmählich weiter nach rechts verschoben und damit auch das auf diesen Platten 26 liegende Fördergut, ohne Beschleunigungen ausgesetzt zu sein, auf diese Seite des Förderers 1 gebracht.

Wie in Fig. 6 dargestellt ist, ist im Bereich der sich in die Schienenstränge 29'' und 29''' gabelnden Führungsschiene und damit im Anschluß an die Weiche 34 auf einer um einen Drehpunkt 33 horizontal verstellbaren Schwenkplatte 39 eine Verformungsnase 41 angeordnet, die bevorzugt aus weichem Kunststoff besteht. Sollte die Weiche 34 einmal eine auf die Nasenspitze gerichtete Mittelstellung einnehmen, weicht die nachgiebige Verformungsnase 41 beim Kontakt mit einem auflaufenden Mitnehmer 36 aus; die Schwenkplatte 39 verstellt sich und die Verschiebeplatten 26 mit dem Transportstück wird dann selbsttätig in einen Schienenstrang 29'' oder 29''' geleitet.

Während das Fördergut somit - entweder nach links oder nach rechts positioniert - am Auslaufende 3 des Positionierförderers 1 auf das sich dort anschließende Förderband abgegeben wird, werden die Verschiebeplatten 26 auf ihrem Weg zurück zum Einlaufende 19 des Förderers 1 von den untenliegenden Führungsschienen 31 wieder in eine bezogen auf die Breite des Positionierförderers 1 mittige Lage zurückgeführt. Sie befinden sich - wie am Einlaufende 19 in Fig. 2 dargestellt - dann wieder in einer Mittenlage, in der die Mitnehmer 35 mit ihren Führungsrollen 36 in dem geraden Schienenstück 29' geführt werden. Da die dem Positionierförderer 1 über ein vorgeschaltetes Förderband zugeförderten Transportgüter stets einen ausreichenden Abstand voneinander einhalten, der entsprechend den Abmessungen der Transportgüter mit dem Ziel einer möglichst hohen Transportfrequenz laufend, z.B. computergesteuert, automatisch verändert wird, steht für die Weiche 34 eine ausreichende Vorlaufzeit zur Verteilung bzw. zum Positionieren der Transportgüter zur Verfügung.

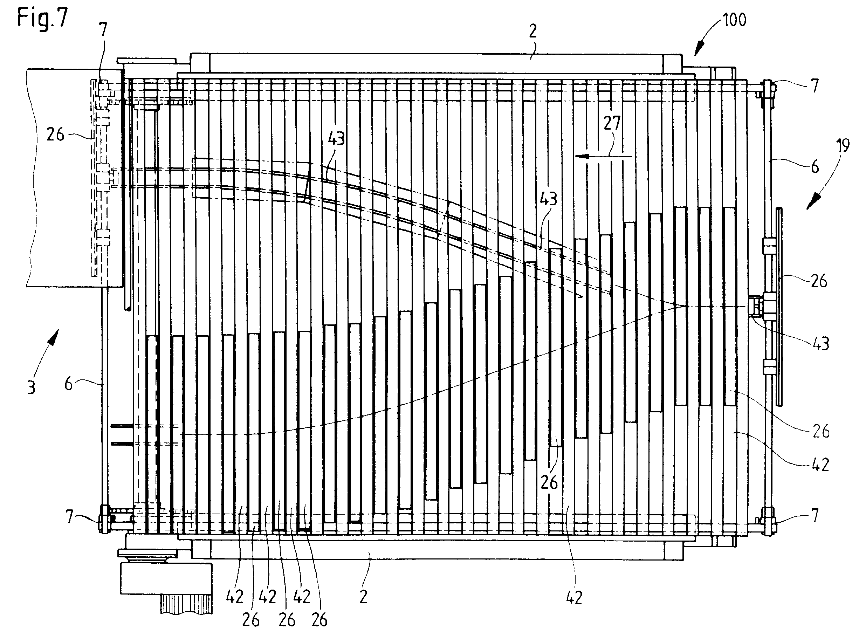

Der in Fig. 7 dargestellte Positionierförderer bzw. Fördergutverteiler 100 unterscheidet sich von dem zuvor beschriebenen Förderer lediglich dadurch, daß sich Verschiebeplatten 26 mit Zwischenleisten 42 abwechseln, die die gesamte Breite des Positionierförderers 100 überbrücken und an den Ketten des Kettensystems 7 befestigt sind. Die Zwischenleisten 46 sind niedriger als die Verschiebeplatten 26, und nur noch die letzteren tragen somit das Transportgut. Schließlich weist der Positionierförderer 100 keine Weiche (vgl. die Fig. 2 und 6) auf; stattdessen werden die Verschiebeplatten 26 von einer magnetischen Schiene 43 geführt.

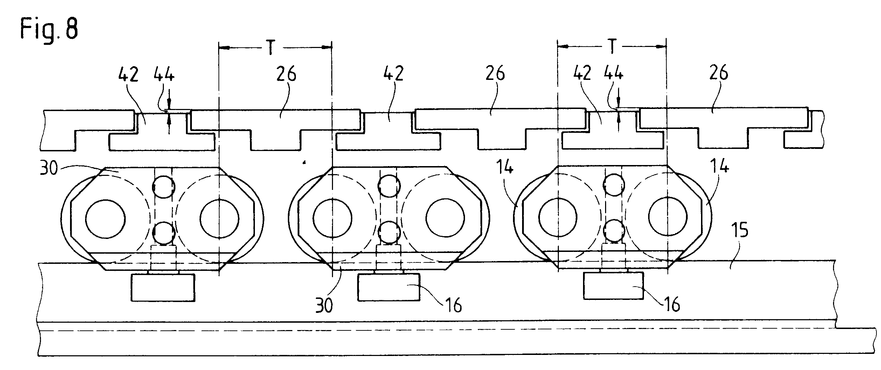

Wie in Fig. 8 gezeigt ist, kann der Fördergutverteiler 1 bzw. 100 einander überlappend angeordnete Verschiebeplatten 26 und Zwischenleisten 42 aufweisen, wobei in diesem Fall die Verschiebeplatten 26 größer und die Zwischenleisten 42 etwa gleich der Kettenteilung T sind, so daß die Verschiebeplatten 26 die um das Abstandsmaß 44 niedrigeren, unterhalb der Transportebene liegenden Zwischenleisten 42 überlappen, und zwar an beiden Längsseiten. Das überlappende Ineinanderschachteln wird hier durch eine T-förmige Querschnittsform der Zwischenleisten 42 und der Verschiebeplatten 26 sowie deren um 180° gedrehte Einbaulage erreicht. Während die Verschiebeplatten 26 in der Transportebene zwischen jeweils zwei Rollenblöcken 30 angeordnet sind, befinden sich die Zwischenleisten 42 in der Transportebene zwischen jeweils zwei Stützrädern bzw. Laufrollen 14 eines Rollenblockes 30.

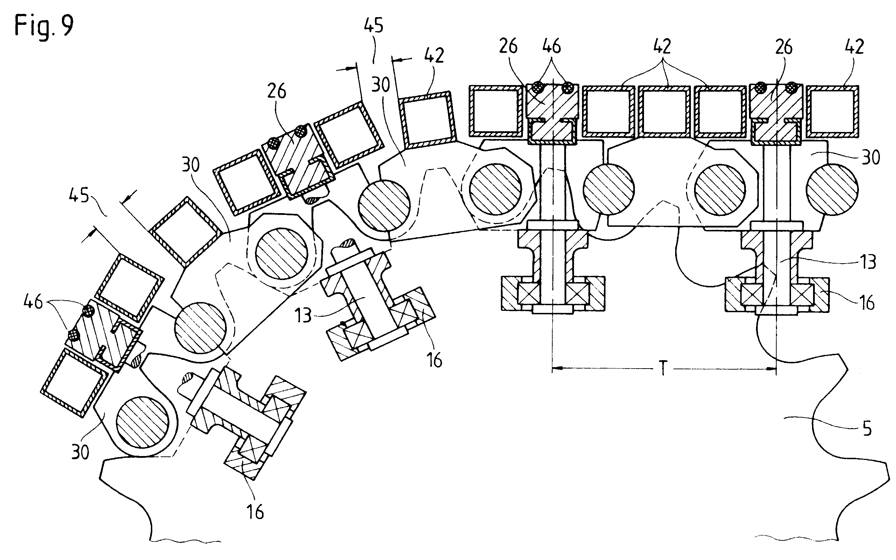

Bei der Ausführung gemäß Fig. 9 sind die als Ballen ausgebildeten Verschiebeplatten 26 und Zwischenleisten 42 kleiner als die Kettenteilung T, und zwischen zwei Verschiebeplatten 26, die hier mittig über der Rollenachse 13 angeordnet und von zwei Zwischenleisten 42 eingeschlossen sind, befinden sich drei Zwischenleisten 42, die nach der Umlenkung durch das Kettenrad 5 eine geschlossene Transportebene bilden. Diese Anordnung minimiert die beim Umlenken entstehenden Lücken 45 und bietet in der Horizontalen eine geschlossene Fläche. Durch in die Oberfläche der Verschiebeplatten 26 eingesetzte Reibbeläge (O-Ringe) 46 wird ein höherer, die Mitnahme des Transportguts begünstigender Reibwert erreicht.

## Patentansprüche

1. Förderer, insbesondere Positionierförderer mit einem angetriebenen Kettensystem (7), dadurch gekennzeichnet, daß das Kettensystem (7) auf einer endlosen, geschlossenen, mit Ausnahme des geraden Positionierbereichs (17) kurvenförmig ausgebildeten Laufbahn (15) abgestützt ist, und daß das Kettensystem (7) die Laufbahn (15) umläuft.

2. Förderer nach Anspruch 1, gekennzeichnet durch das Kettensystem (7) abstützend Laufrollen (14; 16).

3. Förderer nach Anspruch 1 oder 2, dadurch gekennzeichnet, daß die Achsen (13) der Laufrollen (14) miteinander gekoppelt sind.

4. Förderer nach Anspruch 1 oder 2, gekennzeichnet durch das Kettensystem (7) abstützende Gleitflächen.

5. Förderer nach Anspruch 3, dadurch gekennzeichnet, daß seitlich aus dem Kettensystem (7) vorkragende Enden von Querstreben (6) als Rollenachsen (13) ausgebildet sind.

6. Förderer nach einem oder mehreren der Ansprüche 1 bis 5, dadurch gekennzeichnet, daß ein Fördergutverteiler (1; 100) aus auf Querstreben (6) montierten Verschiebeplatten (26) besteht.

7. Förderer nach Anspruch 6, dadurch gekennzeichnet, daß die Breite der Verschiebeplatten (26) zwischen den von den Rollenachsen (13) zweier benachbarter Verschiebeplatten (26) definierten Drehpunkten der Kettenteilung (T) entspricht.

8. Förderer nach Anspruch 6 oder 7, dadurch gekennzeichnet, daß abwechselnd Verschiebeplatten (26) und sich über die Breite des Fördergutverteilers (1; 100) erstreckende, an den Ketten des Kettensystems (7) befestigte, niedriger als die verschiebeplatten (26) ausgebildete Zwischenleisten (42) angeordnet sind.

9. Förderer nach Anspruch 8, dadurch gekennzeichnet, daß sich einer Verschiebeplatte (26) jeweils eine Zwischenleiste (42) anschließt.

10. Förderer nach Anspruch 8 oder 9, dadurch gekennzeichnet, daß die Verschiebeplatten (26) und die Zwischenleisten (42) einander zumindest an einer Längsseite überlappend angeordnet sind.

11. Förderer nach Anspruch 8, dadurch gekennzeichnet, daß die verschiebeplatten (26) und die Zwischenleisten (42) kleiner als die Kettenteilung (T) sind und zwischen zwei Verschiebeplatten (26) mehrere Zwischenleisten (42) angeordnet sind.

12. Förderer nach einem oder mehreren der Ansprüche 6 bis 11, dadurch gekennzeichnet, daß die Oberfläche der Verschiebeplatten (26) mit Reibbelägen (46) versehen ist.

13. Förderer nach einem oder mehreren der Ansprüche 1 bis 12, gekennzeichnet durch am Auslaufende (3) angeordnete Kettenräder (5).

14. Förderer nach einem oder mehreren der Ansprüche 1 bis 13, dadurch gekennzeichnet, daß die Laufbahnen (15) aus geraden, oberen Leisten (21) des Positionierbereichs (17) und ihnen gegenüberliegenden, unteren, kurvenförmigen Führungsleisten (23) bestehen, denen einerseits auslaufseitige, auf einer Antriebswelle (4) der Kettenräder (5) und andererseits einlaufseitige, auf einer Tragachse (24) gelagerte Umlenk- und Führungssegmente (22) zugeordnet sind.

15. Förderer nach einem oder mehreren der Ansprüche 1 bis 14, dadurch gekennzeichnet, daß die Laufbahnen (15) elastisch beschichtet sind.

16. Förderer, insbesondere Positionierförderer, mit einem angetriebenen Kettensystem, und mit Mitnehmern in Führungsschienen eingreifende Fördergutverteiler nach einem oder mehreren der Ansprüche 6 bis 15, gekennzeichnet durch kurvenförmige Führungsschienen (29, 29', 29'', 29'''; 31; 43).

17. Förderer nach Anspruch 16, gekennzeichnet durch eine die verschiebeplatten (26) führende magnetische Schiene (43).

18. Förderer nach Anspruch 16 oder 17, gekennzeichnet durch sich zumindest sich in zwei Stränge (29'', 29''') verzweigende Führungsschienen (29; 31; 43).

19. Förderer nach Anspruch 16 oder 18, gekennzeichnet durch eine den Schienensträngen (29'', 29''') einlaufseitig vorgeschaltete, kurvenförmige Weiche (34).

20. Förderer nach Anspruch 19, dadurch gekennzeichnet, daß die Weiche (34) mit einem Servo-Motor (38) verbunden ist.

21. Förderer nach Anspruch 19 oder 20, dadurch gekennzeichnet, daß die Führungsschienen (29, 29', 29'') der Weiche (34) mit, einer nachgiebigen Verformungsnase (41) zugewandt sind.

22. Förderer nach Anspruch 21, dadurch gekennzeichnet, daß die Verformungsnase (41) auf einer Schwenkplatte (39) angeordnet ist.

## Claims

1. Conveyor, in particular positioning conveyor having a driven chain system (7), characterized in that the chain system (7) is supported on an endless, closed track (15), formed curved with the exception of the straight positioning region (17), and in that the chain system (7) runs around the track (15).

2. Conveyor according to claim 1, characterized by rollers (14; 16) which support the chain system (7).

3. Conveyor according to claim 1 or 2, characterized in that the axles (13) of the rollers (14) are coupled with one another.

4. Conveyor according to claim 1 or 2, characterized by slide surfaces which support the chain system (7).

5. Conveyor according to claim 3, characterized in that ends of transverse struts (6), projecting laterally out of the chain system (7), are formed as roller axles (13).

6. Conveyor according to any one or more of claims 1 to 5, characterized in that a distributor (1; 100) for the goods to be conveyed comprises displacement plates (26) mounted on transverse struts (6).

7. Conveyor according to claim 6, characterized in that, the width of the displacement plates (26) between the pivot points defined by the roller axles (13) of two neighbouring displacement plates (26) corresponds to the chain pitch (T).

8. Conveyor according to claim 6 or 7, characterized in that there are arranged alternately displacement plates (26) and intermediate strips (42) which extend over the width of the distributor (1; 100) for goods to be conveyed, are attached to the chains of the chain system (7) and are formed lower than the displacement plates (26).

9. Conveyor according to claim 8, characterized in that each intermediate strip (42) adjoins a displacement plate (26).

10. Conveyor according to claim 8 or 9, characterized in that the displacement plates (26) and the intermediate strips (42) are arranged to overlap one another at least on one longitudinal side.

11. Conveyor according to claim 8, characterized in that the displacement plates (26) and the intermediate strips (42) are smaller than the chain pitch (T) and a plurality of intermediate strips (42) are arranged between two displacement plates (26).

12. Conveyor according to any one or more of claims 6 to 11, characterized in that the surface of the displacement plates (26) is provided with a frictional covering (46).

13. Conveyor according to any one or more of claims 1 to 12, characterized by chain wheels (5) arranged at the delivery end (3).

14. Conveyor according to any one or more of claims 1 to 13, characterized in that the tracks (15) comprise straight, upper strips (21) of the positioning region (17) and lower, curved guide strips (23) lying oppositely to them, with which guide strips there are associated on the one hand, on the delivery side, chain wheels (5) on a drive shaft (4) and on the other hand, on the receiving side, deflection and guide segments (22) mounted on a carrier axle (24).

15. Conveyor according to any one or more of claims 1 to 14, characterized in that the tracks (15) are elastically coated.

16. Conveyor, in particular positioning conveyor, having a driven chain system and a distributor for goods to be conveyed, engaging by means of carriers into guide rails, according to any one or more of claims 6 to 15, characterized by curved guide rails (29, 29', 29'', 29'''; 31, 43).

17. Conveyor according to claim 16, characterized by a magnetic rail (43) guiding the displacement plates (26).

18. Conveyor according to claim 16 or 17, characterized by guide rails (29; 31; 43) which branch off at least into two lines (29'', 29''').

19. Conveyor according to claim 16 or 18, characterized by curved points (34) arranged on the receiving side before the lines of rails (29'', 29''').

20. Conveyor according to claim 19, characterized in that the points (34) are connected with a servo motor (38).

21. Conveyor according to claim 19 or 20, characterized in that the guide rails (29, 29', 29'') confront the points (34) with a yielding deformable nose (41).

22. Conveyor according to claim 21, characterized in that the deformable nose (41) is arranged on a pivot plate (39).

## Revendications

1. Transporteur, notamment transporteur de positionnement, comprenant un système à chaînes (7) entraîné, caractérisé en ce que le système à chaînes (7) prend appui sur une voie de roulement (15) sans fin et fermée qui est réalisée de façon courbée à l'exception de la zone de positionnement rectiligne (17), et en ce que le système à chaînes (7) circule autour de la voie de roulement (15).

2. Transporteur selon la revendication 1, caractérisé par des galets de roulement (14; 16) supportant le système à chaînes (7).

3. Transporteur selon la revendication 1 ou 2, caractérisé en ce que les axes (13) des galets de roulement (14) sont accouplés entre eux.

4. Transporteur selon la revendication 1 ou 2, caractérisé par des surfaces de glissement supportant le système à chaînes (7).

5. Transporteur selon la revendication 3, caractérisé en ce que des extrémités d'entretoises (6) faisant saillie latéralement du système à chaînes (7) sont réalisées en tant qu'axes de galets (13).

6. Transporteur selon l'une ou plusieurs des revendications 1 à 5, caractérisé en ce qu'un répartiteur (1 ; 100) pour les objets à transporter est composé de plaques de déplacement (26) montées sur des entretoises (6).

7. Transporteur selon la revendication 6, caractérisé en ce que la largeur des plaques de déplacement (26) entre les points de rotation définis par les axes de galets (13) de deux plaques de déplacement adjacentes (26) correspond au pas de chaîne (T).

8. Transporteur selon la revendication 6 ou 7, caractérisé en ce que sont disposées en alternance des plaques de déplacement (26) et des lattes intercalaires (42) qui s'étendent sur la largeur du répartiteur (1 ; 100) pour les objets à transporter, qui sont fixées aux chaînes du système à chaînes (7) et qui sont abaissées par rapport aux plaques de déplacement (26).

9. Transporteur selon la revendication 8, caractérisé en ce qu'une latte intercalaire (42) fait chaque fois suite à une plaque de déplacement (26).

10. Transporteur selon la revendication 8 ou 9, caractérisé en ce que les plaques de déplacement (26) et les lattes intercalaires (42) sont disposées en se chevauchant au moins sur un côté longitudinal.

11. Transporteur selon la revendication 8, caractérisé en ce que les plaques de déplacement (26) et les lattes intercalaires (42) sont plus petites que le pas de chaîne (T) et en ce que plusieurs lattes intercalaires (42) sont disposées entre deux plaques de déplacement (26).

12. Transporteur selon l'une ou plusieurs des revendications 6 à 11, caractérisé en ce que la surface des plaques de déplacement (26) est munie de garnitures d'adhérence (46).

13. Transporteur selon l'une ou plusieurs des revendications 1 à 12, caractérisé par des roues à chaîne (5) disposées à l'extrémité de sortie (3).

14. Transporteur selon l'une ou plusieurs des revendications 1 à 13, caractérisé en ce que les voies de roulement (15) sont composées de lattes rectilignes supérieures (21) de la zone de positionnement (17) et de lattes de guidage (23) inférieures courbées opposées aux précédentes, auxquelles sont associés, d'une part, des segments de renvoi et de guidage (22) situés du côté de la sortie et montés sur un arbre d'entraînement (4) des roues à chaîne (5) et, d'autre part, des segments de renvoi et de guidage (22) situés du côté de l'entrée et montés sur un axe porteur (24).

15. Transporteur selon l'une ou plusieurs des revendications 1 à 14, caractérisé en ce que les voies de roulement (15) sont recouvertes d'un revêtement élastique.

16. Transporteur, notamment transporteur de positionnement, comprenant un système à chaînes entraîné et un répartiteur pour les objets à transporter engrenant dans des rails de guidage à l'aide de tocs d'entraînement selon l'une ou plusieurs des revendications 6 à 15, caractérisé par des rails de guidage (29, 29', 29'', 29''' ; 31 ; 43) courbes.

17. Transporteur selon la revendication 16, caractérisé par un rail magnétique (43) guidant les plaques de déplacement (26).

18. Transporteur selon la revendication 16 ou 17, caractérisé par des rails de guidage (29 ; 31 ; 43) se ramifiant en au moins deux tronçons (29'', 29''').

19. Transporteur selon la revendication 16 ou 18, caractérisé par un aiguillage courbe (34) monté du côté de l'entrée, en amont des tronçons de rail (29'', 29''').

20. Transporteur selon la revendication 19, caractérisé en ce que l'aiguillage (34) est relié à un servomoteur (38).

21. Transporteur selon la revendication 19 ou 20, caractérisé en ce que les rails de guidage (29, 29', 29'') pointent vers l'aiguillage (34) avec un bec élastique (41).

22. Transporteur selon la revendication 21, caractérisé en ce que le bec élastique (41) est disposé sur une plaque pivotante (39).
